# EUROPEAN PATENT APPLICATION

(11) **EP 4 748 813 A1**
(43) Date of publication of application: **27.05.2026**
(21) Application number: 25208620.2
(22) Date of filing: 14.10.2025
(51) Int. Cl.: C04B 35/628, C04B 35/80, C04B 41/00, C04B 35/565

(54) **METHOD FOR FABRICATING INTERFACE COATINGS**

(30) Priority: 17.10.2024 US 202418919350
(71) Applicant: RTX Corporation, Farmington, CT 06032 (US)
(72) Inventor: CALLAWAY, Evan B., Goleta, 93117 (US); SUDRE, Olivier H., Glastonbury, 06073 (US); NABLE, Jun, Hamden, 06518 (US); GARG, Nitin, Charlotte, 28211 (US)
(74) Representative: Dehns

(57) **Abstract**

A method for fabricating an interface coating on a substrate, comprising (i) providing a substrate; (ii) depositing on the substrate at least one layer of boron nitride; and (iii) depositing on the boron nitride layer a Si₃N₄-BN multilayer coating to form a coated substrate, the Si₃N₄-BN multilayer coating comprises a pattern of alternating layers having at least one boron nitride layer and at least one silicon nitride layer according to the following steps: (iiia) depositing at a first deposition temperature a layer of silicon nitride at a first thickness; (iiib) depositing at a second deposition temperature a layer of boron nitride at a second thickness; and repeating steps (iiia) and (iiib) until forming the Si₃N₄-BN multilayer coating. The coated substrate is a ceramic fibrous preform.

## Description

### FIELD OF THE INVENTION

The subject matter disclosed herein relates to interface coatings and, in particular, to methods for fabricating interface coatings.

### BACKGROUND OF THE INVENTION

Si-doped BN (SiBN) is often used as an interface coating (IFC) in ceramic matrix composites ("CMCs") to improve their durability by promoting crack sealing. However, the efficacy of the SiBN in crack sealing is dependent upon the composition, that is, the Si content. In chemical vapor infiltration (CVI) reactors, a natural gradient in the codeposition of BN and SiN to form SiBN occurs due to the difference in the kinetics of the two deposition reactions. As a result, large variations in the Si content through thickness of a ceramic matrix composite or across multiple ceramic matrix composites located in different regions of the reactor can occur. Therefore, depositing a uniform doping of Si within a ceramic matrix composite and across all ceramic matrix composites is critical for the long-term durability of resultant CMCs.

There exists a need for an IFC layer exhibiting uniformity so as to improve the durability of the IFC system for the resultant CMC.

### SUMMARY OF THE INVENTION

The present disclosure is directed, in a first aspect, to a method for fabricating an interface coating on a substrate, comprising: (i) providing a substrate; (ii) depositing on the substrate at least one layer of boron nitride; and (iii) depositing on the boron nitride layer a Si₃N₄-BN multilayer coating to form a coated substrate, the Si₃N₄-BN multilayer coating comprises a pattern of alternating layers having at least one silicon nitride layer and at least one boron nitride layer according to the following steps: (iiia) depositing at a first deposition temperature a layer of silicon nitride at a first thickness; (iiib) depositing at a second deposition temperature a layer of boron nitride at a second thickness; and repeating steps (iiia) and (iiib) until forming the Si₃N₄-BN multilayer coating.

In another aspect, the present disclosure is directed to a coated substrate, comprising: a substrate including a ceramic fibrous preform having a coating deposited on, within and throughout the preform, the coating comprising the following structure: at least one layer of boron nitride disposed adjacent to the ceramic fibrous preform; at least one Si₃N₄-BN multilayer coating disposed adjacent to the boron nitride layer, the Si₃N₄-BN multilayer coating comprises a pattern of one or more alternating layers having: at least one layer of silicon nitride at a first thickness; at least one layer of boron nitride at a second thickness.

In yet another aspect, which the Applicant expressly reserves the right to claim independently, the present disclosure is directed to a method of fabricating a ceramic matrix composite, comprising: (i) providing at least one ceramic fibrous preform; and (ii) depositing on the substrate at least one layer of boron nitride; and (iii) depositing on the boron nitride layer a Si₃N₄-BN multilayer coating to form at least one coated ceramic fibrous preform, the Si₃N₄-BN multilayer coating comprises a pattern of alternating layers having at least one boron nitride layer and at least one silicon nitride layer according to the following steps: (iiia) depositing at a first deposition temperature a layer of silicon nitride at a first thickness; (iiib) depositing at a second deposition temperature a layer of boron nitride at a second thickness; and repeating steps (iiia) and (iiib) until forming the Si₃N₄-BN multilayer coating to form the at least one coated ceramic fibrous preform; (iv) depositing on the Si₃N₄-BN multilayer coating at least one layer of silicon carbide to form a partially densified ceramic matrix composite; (v) infiltrating a matrix material on and within the partially densified ceramic matrix composite; and (vi) densifying the matrix material on and within the partially densified ceramic matrix composite to form a ceramic matrix composite, wherein the Si₃N₄-BN multilayer coating comprises a total thickness of approximately 50 nanometers to approximately 300 nanometers.

In further examples of the present disclosure, including further examples of the above, depositing at the first deposition temperature comprises raising a starting deposition temperature until achieving the first deposition temperature.

In further examples of the present disclosure, including further examples of the above, depositing at the second deposition temperature comprises lowering the first deposition temperature until achieving the second deposition temperature.

In further examples of the present disclosure, including further examples of the above, repeating the deposition comprises raising the second deposition temperature until achieving the first deposition temperature and lowering the first deposition temperature until achieving the second deposition temperature.

In further examples of the present disclosure, including further examples of the above, the first thickness is approximately 2 nanometers to approximately 30 nanometers.

In further examples of the present disclosure, including further examples of the above, the second thickness is approximately 2 nanometers to approximately 30 nanometers.

In further examples of the present disclosure, including further examples of the above, the Si₃N₄-BN multilayer coating comprises a total thickness of approximately 50 nanometers to approximately 300 nanometers.

In further examples of the present disclosure, including further examples of the above, the Si₃N₄-BN multilayer coating is uniform throughout the coated substrate, and a ratio of a thickness of the boron nitride layer of the Si₃N₄-BN multilayer coating to a thickness of the silicon nitride layer of the Si₃N₄-BN multilayer coating comprises approximately 1 to approximately 4.

In further examples of the present disclosure, including further examples of the above, the method further comprises depositing a layer of silicon carbide on the Si₃N₄-BN multilayer coating of the coated substrate to form a partially densified ceramic matrix composite.

In further examples of the present disclosure, including further examples of the above, the method further comprises, prior to depositing the Si₃N₄-BN multilayer coating, depositing on the boron nitride layer at least one layer of silicon nitride disposed between the boron nitride layer and the Si₃N₄-BN multilayer coating.

In further examples of the present disclosure, including further examples of the above, the method further comprises, prior to depositing the Si₃N₄-BN multilayer coating, depositing on the silicon nitride layer at least one additional layer of boron nitride disposed between the silicon nitride layer and the Si₃N₄-BN multilayer coating.

In further examples of the present disclosure, including further examples of the above, the coated substrate further comprises at least one layer of silicon nitride disposed adjacent the boron nitride layer and between the boron nitride layer and the Si₃N₄-BN multilayer coating.

In further examples of the present disclosure, including further examples of the above exemplary embodiments, the coated substrate further comprises at least one additional layer of boron nitride disposed adjacent the silicon nitride layer and between the silicon nitride layer and the Si₃N₄-BN multilayer coating.

In further examples of the present disclosure, including further examples of the above, the first thickness is approximately 2 nanometers to approximately 30 nanometers.

In further examples of the present disclosure, including further examples of the above, wherein the second thickness is approximately 2 nanometers to approximately 30 nanometers.

In further examples of the present disclosure, including further examples of the above, wherein the Si₃N₄-BN multilayer coating comprises a total thickness of approximately 50 nanometers to approximately 300 nanometers.

In further examples of the present disclosure, including further examples of the above, wherein the Si₃N₄-BN multilayer coating composition is uniform throughout the coated substrate, and a ratio of a thickness of the boron nitride layer of the Si₃N₄-BN multilayer coating to a thickness of the silicon nitride layer of the Si₃N₄-BN multilayer coating comprises approximately 1 to approximately 4.

In further examples of the present disclosure, including further examples of the above, the coated substrate further comprises at least one layer of silicon carbide disposed adjacent the Si₃N₄-BN multilayer coating and opposite the at least one layer of boron nitride.

In further examples of the present disclosure, including further examples of the above, the Si₃N₄-BN multilayer coating is uniform throughout the coated substrate, and a ratio of a thickness of the boron nitride layer of the Si₃N₄-BN multilayer coating to a thickness of the silicon nitride layer of the Si₃N₄-BN multilayer coating comprises approximately 1 to approximately 4.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a flowchart illustrating an exemplary method for fabricating an interface coating on a substrate.
FIG. 2 is an illustration of a fiber or a fiber tow of a ceramic fibrous preform exhibiting and possessing an exemplary coating deposited according to the exemplary method of FIG. 1.
FIG. 3 is another illustration of another fiber or another fiber tow of another ceramic fibrous preform exhibiting and possessing another exemplary coating deposited according to the exemplary method of FIG. 1.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to an exemplary method for fabricating an interface coating on a substrate such as a ceramic fibrous preform. The ceramic fibrous preform may contain at least one fiber or at least one fiber tow exhibiting and possessing an exemplary multilayer interface coating deposited according to the aforementioned exemplary method. The aforementioned exemplary method may also serve as a starting point to then fabricate a CMC. In accordance with the present invention, an exemplary SiBN-like coating ("Si₃N₄-BN multilayer coating") may be formed using multilayer structure containing individual layers of BN and Si₃N₄. As discussed below, the exemplary Si₃N₄-BN multilayer coating may contain alternating layers of boron nitride and silicon nitride deposited at different temperatures and other processing parameters to ensure that the ratio of boron nitride and silicon nitride deposited may be uniform throughout the deposition process. The resultant exemplary Si₃N₄-BN multilayer coating may serve as a functional IFC with improved durability performance. For instance, when the thin layers of boron nitride and silicon nitride of the exemplary Si₃N₄-BN multilayer coating disclosed herein oxidize, the aforementioned thin layers form a borosilicate glass with a composition like that of a SiBN composition with an equivalent Si content.

As used herein, a "coated substrate" or "coated preform" refers to an IFC coated substrate or preform. As also used herein, a "partially densified CMC" refers to a coated substrate or preform that includes a SiC layer that facilitates rigidization of the coated substrate or preform. As also used further herein, a "ceramic matrix composite" or "CMC" refers to a matrix infiltrated into the coated substrate or coated preform or alternatively, a matrix infiltrated into the rigidized partially densified CMC.

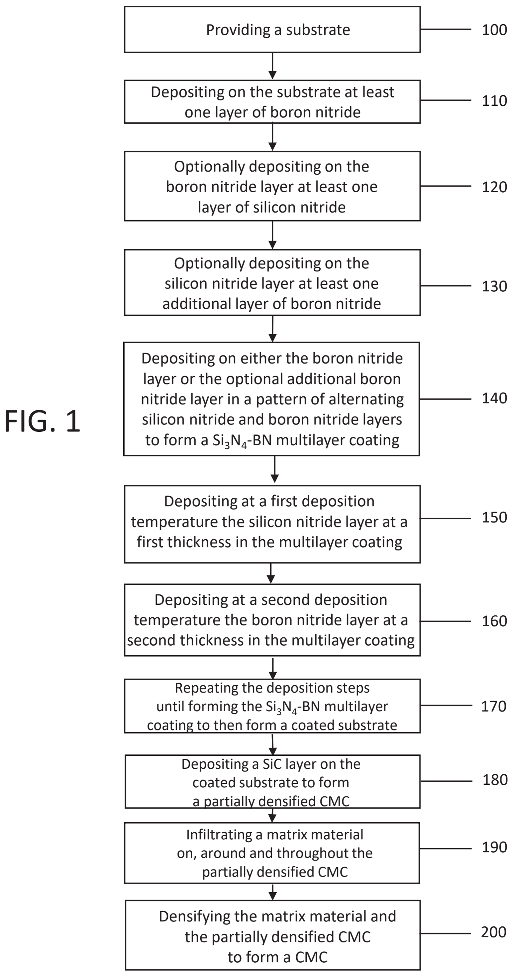

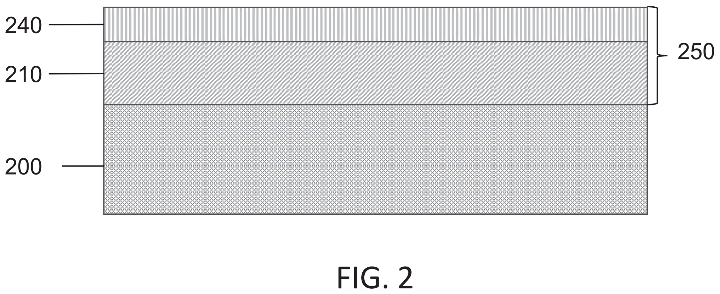

Referring now to FIG. 1, a flowchart illustrating an exemplary method for fabricating a Si₃N₄-BN multilayer is shown. At an exemplary step 100 of FIG. 1, a substrate, such as a fibrous ceramic preform 200 containing at least one fiber tow of FIG. 2, may be provided. When considering the fibrous ceramic preform, any carbon-containing fibrous preform suitable for use in CMCs may be utilized. For example, suitable carbon-containing fibers may include, but are not limited to, silicon carbide (SiC) fibers. For instance, SiC fibers for use herein may include, but are not limited to, Hi-Nicalon^{™} and Hi-Nicalon^{™} Type S fibers; Tyranno ZMI and Tyranno SA fibers of Tyranno Fibers^{®}; Sylramic fibers; combinations thereof, and the like.

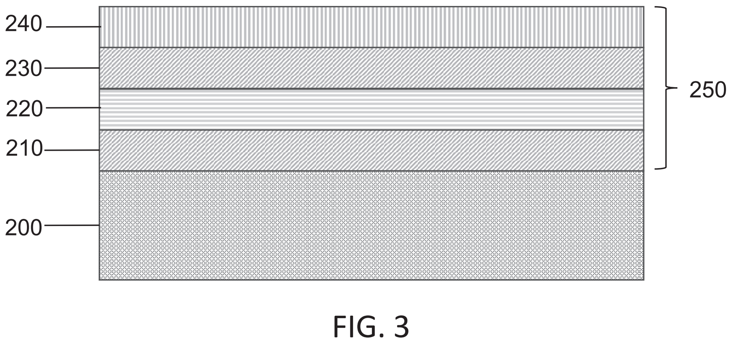

Next, at an exemplary step 110 of FIG. 1, at least one layer of boron nitride 210 may be deposited on the substrate (See also FIGS. 2 and 3). The boron nitride layer(s) may impart to and/or enhance crack deflection property of the resultant multilayer interface coating disclosed herein. Deposition may take place using a technique, such as but not limited to, chemical vapor infiltration (CVI), atomic layer deposition (ALD), combinations comprising any one of the foregoing, and the like. Next, once deposited, at least one optional layer of silicon nitride 220 may be deposited on the boron nitride layer 210 at an exemplary step 120 of FIG. 1 (See FIG. 3). The optional silicon nitride layer(s) may impart to and/or enhance oxidation protection property of the resultant multilayer interface coating disclosed herein. The boron nitride layer 210 may be disposed between the substrate 200 and the optional silicon nitride layer 220 (See FIG. 3). Next, once deposited, at least one optional additional layer of boron nitride 230 may be deposited on the optional silicon nitride layer 220 at an exemplary step 130 of FIG. 1 (See FIG. 3). The optional silicon nitride layer 220 may be disposed between the boron nitride layer 210 and optional additional boron nitride layer 230 (See FIG. 3). In at least one embodiment, alternative coating materials, other than boron nitride and silicon nitride, may be utilized so long as those alternative coating materials may promote adhesion and compatibility between a carbide, e.g., SiC, and the material(s) of the fibers and/or fiber tows. Suitable alternative coating materials may include, but are not limited to, carbon, Si-doped boron nitride, silicon carbide, boron carbide, combinations comprising any one of the foregoing, and the like.

Referring again to FIG. 1, at an exemplary step 140, a Si₃N₄-BN multilayer coating 240 may be deposited on either the boron nitride layer 210 (See also FIG. 2) or the optional additional boron nitride layer 230 (See FIG. 3). The Si₃N₄-BN multilayer coating 240 may comprise a pattern of alternating layers having at least one silicon nitride layer and at least one boron nitride layer (See FIGS. 2 and 3). When depositing the Si₃N₄-BN multilayer coating 240, the layer of silicon nitride may be deposited at a first deposition temperature until achieving a first thickness at an exemplary step 150 of FIG. 1. The first deposition temperature may be a temperature optimally suited for silicon nitride alone rather than an SiBN composition. For example, the temperature for silicon nitride deposition may be approximately 850°C to approximately 1,000°C. The first thickness of the silicon nitride layer of the Si₃N₄-BN multilayer coating 240 may be approximately 2 nanometers to approximately 30 nanometers, also known as a "thin" layer. Once deposited, the deposition temperature may be lowered until reaching a second deposition temperature suitable for depositing amorphous boron nitride. Once reached, the layer of boron nitride may be deposited at the second deposition temperature until achieving a second thickness at an exemplary step 160 of FIG. 1. The second deposition temperature may be approximately 650°C to approximately 850°C. The second thickness of the boron nitride layer of the Si₃N₄-BN multilayer coating 240 may be approximately 2 nanometers to approximately 30 nanometers, also known as a "thin" layer. When preparing to deposit the next silicon nitride layer of the Si₃N₄-BN multilayer coating 240, the deposition temperature again may be raised until reaching the first deposition temperature. Once reached, the next silicon nitride layer of the pattern of alternating layers of Si₃N₄-BN multilayer coating 240 may be deposited. Once deposited, the deposition temperature again may be lowered until reaching the second deposition temperature. Once reached, the next boron nitride layer of the pattern of alternating layers of Si₃N₄-BN multilayer coating 240 may be deposited. These exemplary steps may be repeated at an exemplary step 170 of FIG. 1 until the resultant pattern of alternating layers of boron nitride and silicon nitride constitute the Si₃N₄-BN multilayer coating 240 at a desired overall thickness and form a coated substrate or coated preform (See FIG. 1). In addition, with the completion of the Si₃N₄-BN multilayer coating 240, an exemplary interface coating 250 or IFC 250 may be formed that contains at least one layer of boron nitride 210 and Si₃N₄-BN multilayer coating 240 (See FIG. 2); or, in the alternative, at least one layer of boron nitride 210, at least one optional layer of silicon nitride 220, at least one optional additional layer of boron nitride 230, and Si₃N₄-BN multilayer coating 240 (See FIG. 3).

The resultant exemplary Si₃N₄-BN multilayer coating 240 may exhibit and possess a total thickness of approximately 50 nanometers to approximately 300 nanometers. The overall composition of the Si₃N₄-BN multilayer coating may be nearly uniform throughout the at least partially densified CMC. If the Si₃N₄-BN multilayer composition differs spatially throughout the entire coated substrate or coated preform, then the Si₃N₄-BN multilayer coating may not function as intended in all locations throughout the entire partially densified CMC, which can be detrimental to durability performance. In a CVI process, a natural gradient in thickness forms from exterior to interior locations throughout the partially densified CMC due to depletion of precursor gases diffusing therethrough. An exemplary ratio of interior to exterior thicknesses of BN or Si₃N₄ layers may be driven by preform geometry and process conditions such as deposition temperature. In at least one embodiment, the thickness of a BN layer of the Si₃N₄-BN multilayer coating deposited within the coated substrate or coated preform may be as proximate to the thickness of a BN layer of the Si₃N₄-BN multilayer coating deposited on the exterior of the coated substrate or coated preform. For example, a ratio of the thickness of the BN layer of the Si₃N₄-BN multilayer coating deposited within the coated substrate or coated preform to the thickness of a BN layer of the Si₃N₄-BN multilayer coating deposited on the exterior of the coated substrate or coated preform may be approximately 0.1 to approximately 1, and preferably as close to approximately 1 as possible. For example, in a given coated substrate or coated preform geometry, a BN deposition temperature of approximately 700°C and a Si₃N₄ deposition temperature of approximately 950°C in combination may yield a ratio of external to internal thickness of approximately 0.4. In this case, the resultant Si₃N₄-BN multilayer coating 240 composition would be uniform throughout, that is, throughout the interior and on the exterior too, of the coated substrate or coated preform, as well as the eventual, resultant CMC article. If the BN deposition were increased to 800°C, the ratio for BN internal to external thickness may decrease to a lower value, e.g., approximately 0.2, that is, the external BN to Si₃N₄ thickness ratio within the Si₃N₄-BN multilayer may be greater than interior BN to Si₃N₄ thickness ratio within the Si₃N₄-BN multilayer. In this case, the resultant external Si₃N₄-BN multilayer coating 240 composition may become boron-rich and the internal Si₃N₄-BN multilayer coating 240 composition may become boron lean. This resultant mismatch in the composition of the Si₃N₄-BN multilayer coating throughout the coated substrate or coated preform may detrimentally impact the durability performance. Consequently, the ratio of BN to Si₃N₄ thickness at a given location of the coated substrate or coated preform also may determine the Si₃N₄-BN multilayer coating 240 composition. The composition targets for Si₃N₄-BN multilayer coating 240 correspond to an exemplary ratio of the BN individual layer thickness of the Si₃N₄-BN multilayer coating to the Si₃N₄ individual layer thickness of the Si₃N₄-BN multilayer coating may be approximately 1 to approximately 4, that also may indicate silicon may be present in an amount of approximately 10 atomic percent to approximately 15 atomic percent. If the ratio is less than 1, then the resultant Si-rich Si₃N₄-BN multilayer coating 240 may be slow to oxidize and plug the matrix crack. If the ratio is greater than 4, then the resultant Si₃N₄-BN multilayer coating 240 may oxidize to form a boria-rich borosilicate glass which may readily volatilize at operational temperatures in the presence of small amounts of water vapor. More silicon in the glass may be needed to stabilize and seal the crack. The aforementioned ratio range of 1 to 4 may ensure the Si₃N₄-BN multilayer coating 240 may oxidize quickly due to the boron content and may be sufficiently stable in operational conditions due to the silicon content.

Referring again to FIG. 1, at an exemplary step 180, an additional, and optional, SiC layer (not shown in FIGS. 2 and 3) may be deposited on, around and throughout the coated substrate or coated preform to form at least one partially densified SiC CMC. The additional, optional SiC layer may exhibit and possess a thickness of between about 0.5 micron and about 2 microns. Deposition may take place using a technique, such as but not limited to, chemical vapor infiltration (CVI), chemical vapor deposition (CVD), physical vapor deposition (PVD), atomic layer deposition (ALD), molecular-beam epitaxy, combinations thereof, and the like. When carrying out the exemplary method disclosed herein, although a SiC layer may be deposited, additional materials suitable for promoting adhesion and compatibility between such materials and exemplary reaction-barrier coating materials may be utilized. Additional suitable materials may include, but are not limited to, carbon, materials similar to SiC, combinations thereof, and the like.

Once the coated substrate, coated preform or desired partially densified CMC is achieved, the exemplary method of FIG. 1 may serve as the base upon which to form a ceramic matrix composite according to the additional exemplary steps 190 and 200 of FIG. 1. At the exemplary step 190 of FIG. 1, the coated partially densified CMC may be infiltrated with a slurry containing, but not limited to, a carbon source material. The slurry infiltrated partially densified SiC CMC may then undergo pyrolysis to yield carbon deposited therein. The carbon source materials may include any material capable of depositing carbon after undergoing pyrolysis. Suitable carbon source materials may include, but are not limited to, hydrocarbon containing resins, e.g., phenolic resin, furan resin, combinations comprising at least one of the foregoing, and the like; hydrocarbon containing polymers, e.g., benzoxazine, combinations comprising at least one of the foregoing, and the like; hydrocarbon containing binders, e.g., Methocel^{™} (commercially available from ChemPoint^{®} located in Bellevue, Washington), furfuryl alcohol, combinations comprising at least one of the foregoing, and the like; carbide formers, also known as carbide forming materials, e.g., silicon, boron, zirconium, hafnium, titanium, tantalum, molybdenum, tungsten, vanadium, niobium, combinations comprising at least one of the foregoing, and the like; and, and, various carbides, e.g., silicon carbides, boron carbides, zirconium carbides, hafnium carbides, titanium carbides, tantalum carbides, molybdenum carbides, tungsten carbides, vanadium carbides, niobium carbides, combinations comprising at least one of the foregoing, and the like.

Next, at the exemplary step 200 of FIG. 1, the slurry infiltrated partially densified CMC may be infiltrated using any one or more of the following techniques: melt infiltration (MI), chemical vapor infiltration (CVI), polymer infiltration and pyrolysis (PIP), combinations thereof, and the like. Once completed, the resultant product may be a densified CMC article, for example, a densified SiC-SiC CMC article.

The exemplary multilayer coating disclosed herein includes the deposition of thin, alternating layers of boron nitride and silicon nitride. As discussed above, these alternating layers may be deposited at different temperatures and other processing parameters to ensure that the ratio of boron nitride and silicon nitride deposited as the Si₃N₄-BN multilayer coating may be uniform throughout the deposition process. The resultant Si₃N₄-BN multilayer coating may serve as a functional IFC with improved durability performance. The processing parameters of the boron nitride and silicon nitride layers may be chosen such that the ratio of the deposition kinetics to gas diffusion are the same. When the thin layers of boron nitride and silicon nitride of the Si₃N₄-BN multilayer coating layer disclosed herein oxidize, the aforementioned thin layers form a borosilicate glass with a composition like that of an SiBN composition with an equivalent Si content. As also discussed above, prior to depositing the thin alternating layers of boron nitride and silicon nitride constituting the Si₃N₄-BN multilayer coating, additional layers such as boron nitride layer(s) may be included for crack deflection and/or silicon nitride layer(s) may be included for oxidation protection (See FIGS. 2 and 3).

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A method for fabricating an interface coating (250) on a substrate (200), comprising:
(i) providing a substrate (200);
(ii) depositing on the substrate (200) at least one layer of boron nitride (210); and
(iii) depositing on the boron nitride layer (210) a Si₃N₄-BN multilayer coating (240) to form a coated substrate, the Si₃N₄-BN multilayer coating (240) comprises a pattern of alternating layers having at least one silicon nitride layer and at least one boron nitride layer according to the following steps:
(iiia) depositing at a first deposition temperature a layer of silicon nitride at a first thickness;
(iiib) depositing at a second deposition temperature a layer of boron nitride at a second thickness; and
repeating steps (iiia) and (iiib) until forming the Si₃N₄-BN multilayer coating (240).

2. The method of claim 1, wherein depositing at the first deposition temperature comprises raising a starting deposition temperature until achieving the first deposition temperature.

3. The method of claim 1 or 2, wherein depositing at the second deposition temperature comprises lowering the first deposition temperature until achieving the second deposition temperature.

4. The method of any preceding claim, wherein repeating the deposition comprises raising the second deposition temperature until achieving the first deposition temperature and lowering the first deposition temperature until achieving the second deposition temperature.

5. The method of any preceding claim, further comprising depositing a layer of silicon carbide on the Si₃N₄-BN multilayer coating (240) of the coated substrate to form a partially densified ceramic matrix composite.

6. The method of any preceding claim, further comprising, prior to depositing the Si₃N₄-BN multilayer coating (240), depositing on the boron nitride layer (210) at least one layer of silicon nitride (220) disposed between the boron nitride layer (210) and the Si₃N₄-BN multilayer coating (240), and optionally further comprising, prior to depositing the Si₃N₄-BN multilayer coating (240), depositing on the silicon nitride layer (220) at least one additional layer of boron nitride (230) disposed between the silicon nitride layer (220) and the Si₃N₄-BN multilayer coating (240).

7. A coated substrate, comprising:
a substrate (200) including a ceramic fibrous preform (200) having a coating (250) deposited on, within and throughout the preform (200), the coating (250) comprising the following structure:
at least one layer of boron nitride (210) disposed adjacent to the ceramic fibrous preform (200);
at least one Si₃N₄-BN multilayer coating (240) disposed adjacent to the boron nitride layer (210), the Si₃N₄-BN multilayer coating (240) comprises a pattern of one or more alternating layers having:
at least one layer of silicon nitride at a first thickness;
at least one layer of boron nitride at a second thickness.

8. The coated substrate of claim 7, further comprising at least one layer of silicon nitride (220) disposed adjacent the boron nitride layer (210) and between the boron nitride layer (210) and the Si₃N₄-BN multilayer coating (240).

9. The coated substrate of claim 8, further comprising at least one additional layer of boron nitride (230) disposed adjacent the silicon nitride layer (220) and between the silicon nitride layer (220) and the Si₃N₄-BN multilayer coating (240).

10. The coated substrate or method of any preceding claim, wherein the first thickness is approximately 2 nanometers to approximately 30 nanometers.

11. The coated substrate or method of any preceding claim, wherein the second thickness is approximately 2 nanometers to approximately 30 nanometers.

12. The coated substrate or method of any preceding claim, wherein the Si₃N₄-BN multilayer coating (240) comprises a total thickness of approximately 50 nanometers to approximately 300 nanometers.

13. The coated substrate of any of claims 7 to 12, further comprising at least one layer of silicon carbide disposed adjacent the Si₃N₄-BN multilayer coating (240) and opposite the at least one layer of boron nitride (210).

14. A method of fabricating a ceramic matrix composite, comprising:
(i) -(iii) the method of any of claims 1 to 6 or 10 to 12, wherein the substrate (200) is a ceramic fibrous preform (200);
(iv) depositing on the Si₃N₄-BN multilayer coating (240) at least one layer of silicon carbide to form a partially densified ceramic matrix composite;
(v) infiltrating a matrix material on and within the partially densified ceramic matrix composite; and
(vi) densifying the matrix material on and within the partially densified ceramic matrix composite to form a ceramic matrix composite,
wherein the Si₃N₄-BN multilayer coating (240) comprises a total thickness of approximately 50 nanometers to approximately 300 nanometers.

15. The coated substrate or method of any preceding claim, wherein the Si₃N₄-BN multilayer coating (240) is uniform throughout the coated substrate, and a ratio of a thickness of the boron nitride layer of the Si₃N₄-BN multilayer coating (240) to a thickness of the silicon nitride layer of the Si₃N₄-BN multilayer coating (240) comprises approximately 1 to approximately 4.
